# EUROPEAN PATENT APPLICATION

(11) **EP 1 596 312 A2**
(43) Date of publication of application: **16.11.2005**
(21) Application number: 05102925.4
(22) Date of filing: 13.04.2005
(51) Int. Cl.: G06F 17/30, G11B 5/008, G06F 11/14

(54) **Tape drive apparatus, method and computer program product**

(30) Priority: 28.04.2004 US 833272
(71) Applicant: Hewlett-Packard Development Company, L.P., Houston, TX 77070 (US)
(72) Inventor: Topham, Andrew, BS34 8QZ Bristol, Avon (GB); Slater, Alastair Michael, SN16 9LL Malmesbury, Wiltshire (GB); Christie Jr., Leslie G., Hewlett-Packard Company, 83713 Boise, Idaho (US)
(74) Representative: Marsh, David John

(57) **Abstract**

A validity time interval for backup data of a data backup operation is determined. The validity time interval is limited, e.g., by an expiration date and / or an activation date. Validity date indicating the validity time interval is stored in non-volatile memory of the tape cartridge, such as a cartridge memory, when the backup data is written to the tape cartridge by the tape drive. Recovery of the backup data from the tape drive is only possible if recovery is performed within the validity time interval, to provide an efficient way to assure tape rotation.

## Description

### Field of the Invention

The present invention relates to the field of data backup and recovery.

### Background of the Invention

It is known to backup data stored on primary storage, such as a hard disc of a computer system, in order to protect against a disaster that might otherwise irrecoverably destroy all or part of the data. Disasters for example may be fire, flood, computer virus or simply accidental deletion of data. One of the main reasons for using magnetic tape as a backup storage medium is that it provides a stable, reliable and relatively cheap option for storing large volumes of backed-up data.

Backup application software which executes on a computer system typically provides the functions for enabling such computer system data to be both backed-up to, and restored from tape cartridge, which is written to and read from by a tape drive. Well-known backup application software includes 'Replica' from Stac, 'ArcServe' from Computer Associates, 'BackupExec' from Veritas and Data Protectortm' from HP. Well-known tape drives include DDS and LTO compliant tape drives, both available from HP.

An example of a technology that can be used for backup is the linear tape-open (LTO) technology. LTO technology is an "open format" technology, which means that users can have multiple sources of cartridges and compatible tape drives. The ULTRIUM format is the "high capacity" implementation of LTO technology (http://www.lto-technology.com).

Tape drives and tape cartridges which are compliant with ULTRIUM LTO are commercially available from Hewlett Packard (www.hp.com/go/ultrium) and others. A LTO compliant cartridge has a non-volatile cartridge memory (LTO-CM) which is an intelligent memory chip embedded in the cartridge. It uses a radio frequency interface that eliminates the need for a physical power or signal connection between cartridge and tape drive. The LTO-CM is used for storing information which in other tape formats may be stored in the header at the beginning of the tape.

In addition WORM tape cartridges are known from the prior art. A WORM tape cartridge is a write-once tape cartridge that permits writing only once and facilitates prevention of re-writing and erasure. Whilst, because of the rerecordable nature of the tape media, a WORM tape cartridge is unlikely to be be truly "write-once" if appropriate devices can be devised for resetting the tape cartridge to a write enabled state, such circumventing devices are unlikely to be commercially widely available. US patent application 20040037004 shows a recording-medium cartridge including a write-once area in which the re-write of data is forbidden and a re-writable area, in which the re-write of data is allowed. The cartridge memory holds range information that shows the range of the write-once area on the recording medium.

### Summary of the invention

In accordance with one aspect of the present invention, a tape drive apparatus comprises an interface for receiving validity data. The validity data is expressive of a validity time interval of backup data received from a backup application program. The validity time interval specifies a time interval during which the backup data can be read from a tape cartridge.

The data transfer apparatus transfers data between the loaded tape cartridge and the tape drive apparatus. The tape cartridge has a non-volatile memory to which the validity data is written by the data transfer apparatus.

In accordance with a preferred embodiment of the invention the validity data comprises an expiry date that sets an upper limit and/or an activation date that sets a lower limit for the validity time interval.

In accordance with a further preferred embodiment of the invention the interface of the tape drive apparatus is operable to receive a command from the backup application program that directs the tape drive apparatus to write the validity data to the non-volatile memory of the tape cartridge.

In accordance with a further preferred embodiment of the invention the non-volatile memory to which the validity data is written is the tape media of the tape cartridge. For example, the tape media has a pre-defined location that is used for storing of the validity data.

In accordance with a further preferred embodiment of the invention the tape cartridge has an associated integrated circuit memory, such as a cartridge memory. The integrated circuit memory is non-volatile and is used for storage of the validity data.

In another aspect the present invention relates to a backup application program. In addition to backup data, the backup application program provides validity data for the backup data that specifies a validity time interval of the backup data.

In accordance with a preferred embodiment of the invention the backup application program uses a command that is sent to the tape drive apparatus in order to direct the tape drive apparatus to write the validity data to the non-volatile memory of the tape cartridge.

Preferably, the validity data is generated either by the client computers or the media server computer. It is advantageous that the media server computer generates the validity data as it manages the overall backup regime. For example, the media server computer generates the validity intervals from a user defined rule set that the user will have entered when setting up the backup system. These rules are typically derived from the regulations that the business finds it must conform to and/or from the business' own internal rules.

In another aspect the invention concerns a tape drive apparatus comprising a time reference, a data transfer apparatus for reading the validity data from the non-volatile memory of the tape cartridge, and a control apparatus coupled to the time reference and the data transfer apparatus. The control apparatus is operable to disable usage of the loaded tape cartridge if a current time provided by the time reference is not within the validity time interval as specified by the validity data read from the non-volatile memory.

In accordance with a further preferred embodiment of the invention the control apparatus is operable to automatically destroy data that is stored on the tape media if the current time is past an upper limit of the validity time interval. Destruction of the backup data can be performed by means of a complete over-write operation or by writing an end of data (EOD) mark at the beginning of the tape media.

In accordance with a further preferred embodiment of the invention the tape drive apparatus has a non-volatile memory for storing a manufacturing time. The control apparatus is operable to disable usage of the tape drive if a predetermined lifetime after the manufacturing time is exceeded. After the predetermined lifetime has been exceeded the tape drive apparatus needs to be refurbished by the manufacturer. The manufacturer overwrites the manufacturing time by the time when the tape drive is refurbished such that usage of the tape drive apparatus is re-enabled for another lifetime interval.

In another aspect the invention relates to write-once tape cartridge. A write-once tape cartridge is a tape cartridge that can be written only once and prevents re-writing and elimination. Write-once tape cartridge are also referred to as WORM tape. In accordance with the present invention a tape drive apparatus is provided that has a control apparatus for determining whether the loaded write-once tape cartridge is unused, and if so, for writing a data storage time to a non-volatile memory of the tape cartridge which may involve storing this time on the tape media of the tape cartridge or storing it in the tape cartridge memory. The data storage time is an absolute or relative time in order to specify a future point of time. Until the point of time is reached the write-once tape cartridge is in a non-expired status and can be used in normal WORM mode. When the point of time is reached the status of the tape cartridge changes to enable writing to the tape media. This facilitates the administration of tape rotation, tape destruction and/or tape archiving schemes.

In accordance with a preferred embodiment of the invention the tape drive apparatus has a time reference coupled to the control apparatus. When the tape cartridge is unused the control apparatus writes a time stamp to the non-volatile memory of the tape cartridge. Alternatively the time stamp is stored in the non-volatile memory of the tape cartridge by the manufacturer.

In accordance with a preferred embodiment of the invention control information regarding a status of the tape cartridge after expiration of the data storage time is also stored in the non-volatile memory. For example the control information specifies whether the tape cartridge can still be used in the WORM mode, if the tape cartridge has to be transported to an off line storage in an hierarchical storage environment, or if the data stored on the tape media is to be erased.

The present invention is particularly advantageous for specifying tape retention periods and implementing tape rotation schemes, especially for business operational data. This is useful for many businesses that keep records on tape media for a certain time, and then have that data deleted. The retention period is set by concerns such as using the tapes for recovery or legally mandated archives. Once the retention period has expired the data can be destroyed automatically in order to protect confidentiality and / or to match further legal requirements.

### Brief description of the drawings

In the following preferred embodiments of the invention will be described, by way of example only, and with reference to the drawings in which:
- Figure 1: is a schematic block diagram of a tape drive coupled to multiple computer systems,
- Figure 2: is a flow diagram of steps involved in storing backup data and validity data,
- Figure 3: is a flow diagram of steps involved in reading backup data,
- Figure 4: is a flow diagram of steps involved in determining a state of the tape drive,
- Figure 5: is a flow diagram of steps involved in using a write-once tape cartridge.

### Detailed description

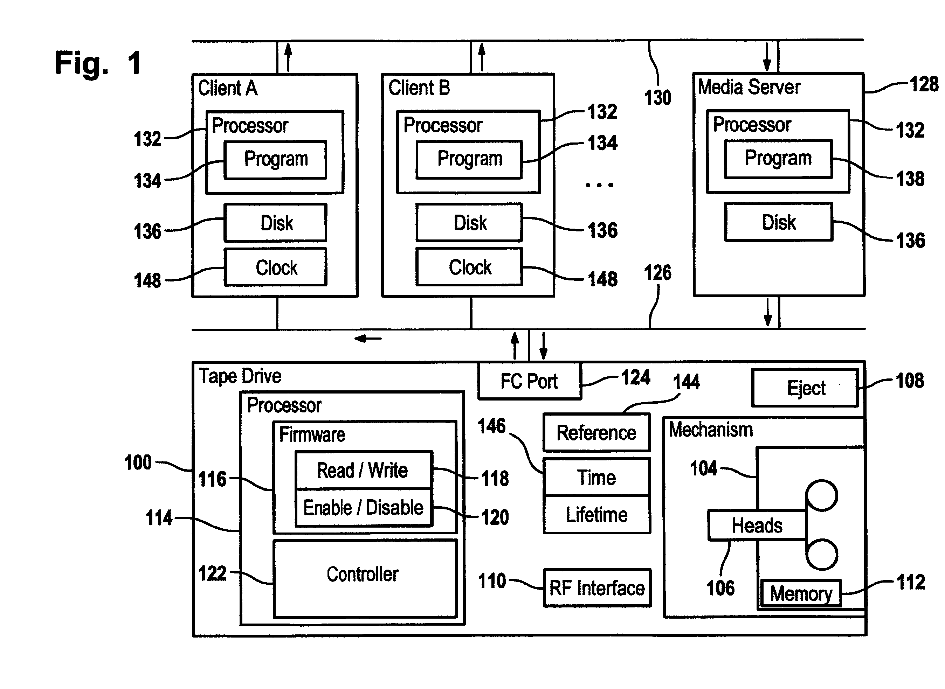

The apparatus of Figure 1 includes tape drive 100 having tape drive mechanism 102, which loads and ejects tape cartridge 104 and winds the tape cartridge 104 forwards or backwards as required for reading and writing data. In a DDS (digital data storage) tape drive, the read / write heads 106 are mounted on a helical scanning drum, which rotates to sweep the heads past the tape in a motion oblique to the direction of travel of the tape. Tape drive apparatus 100 has eject button 108 and RF interface 110 that serves to communicate with cartridge memory 112 of tape cartridge 104.

Processor 114 of tape drive 100 executes firmware 116. Firmware 116 comprises instructions 118 for reading/writing backup data and validity data; firmware 116 comprises instructions 120 for enabling/disabling usage of the loaded tape cartridge 104 and / or tape drive 100. Further, processor 114 runs control program 122 that controls operation of tape drive 100.

Tape drive 100 has interface port 124. In the example considered here port 124 is compliant with the fibre channel (FC) standard, although other interface technologies such as SCSI or SAS could be used. In the case of a FC interface, port 124 is coupled to a storage area network (SAN) 126 comprising FC cables and FC switches.

Tape drive 100 has time reference 144. Preferably time reference 144 is provided by a real-time clock (RTC). The time is accurately set on this clock at the time of manufacture of the tape drive 100 and cannot subsequently be modified in any way. Preferably the real-time clock is battery-powered. Tape drive 100 has memory 146 for storing the time of manufacture of the tape drive 100 'Time' and a predefined limitation for the lifetime of the tape-drive 100 'Lifetime'.

Client computers A, B, ... are coupled to media server computer 128 through Ethernet network 130. Each one of the client computers has a processor 132 for running a backup application program 134 in order to read data stored on local disc 136 and send the backup data over Ethernet network 130 to media server 128 for the purpose of performing the data backup operation. Further, each one of the client computers has a system clock 148. Client computers A, B, ... and media server computer 128 have respective FC ports (not shown in the drawing) for coupling to the network 126 .

When the backup data is read from local disc 136 by the backup application program 134, the backup application program 134 reads the current system time from system clock 148 and adds a predefined value to the current time. This provides an expiry date for the backup data. Alternatively, this expiry date may be generated by the media server at the time that it requests the disk data from the client machines. The expiry date is the upper limit of a validity time interval during which the backup data can be read from the tape cartridge 104. Alternatively or in addition an activation date can be calculated by adding another predefined value to the current system time provided by system clock 148 by backup application program 134. The activation date sets the lower limit for the validity time interval. The lower limit of the validity time interval is the earliest date from which on the backup data can be read from tape cartridge 104.

Media server 128 runs program 138 on its processor 132 for formatting data received from the client computers A, B, ... via Ethernet network 130. During backup program 138 sends the backup data received from the client computers together with the respective validity data expressive of the validity time intervals to tape drive 100 for the purpose of storing the backup data and respective validity data on tape cartridge 104. Preferably program 138 creates backup data sets for the local discs 136 of client computers A, B, ... on the basis of the respective backup data and transmits the corresponding data sets together with the respective validity data via storage area network 126 to tape drive 100.

In the following a data backup operation for client computer A is explained in more detail by way of example. Backup application program 134 of client computer A reads backup data from disc 136 of client computer A and the current system time from system clock 148. On the basis of the current system time and user defined data preservation rules, backup application program 134 calculates a validity time interval during which the backup data is supposed to be readable from tape cartridge 104 after completion of the backup operation. The data preservation rules may be held on each individual client computer, or held by the media server computer.

The validity time interval can either have an upper limit, i.e. an expiry date, or a lower limit, i.e. an activation date, or both lower and upper limits. For calculation of the upper limit, i.e. the expiry date, backup application program 134 reads a first predefined value from disc 136 and adds the first predefined value to the current system time. Likewise, for calculation of the lower limit, i.e. the activation date, backup application program 134 reads a second predefined value from disc 136 and adds the second predefined value to the current system time. As the second predefined value is smaller than the first predefined value this results in a validity time interval. The validity time interval is specified by validity data that includes data descriptive of the upper and / or lower limits of the validity time interval.

Backup application program 134 provides the backup data and the validity data to media server 128 via Ethernet network 130. Program 138 sends a backup command to the interface of tape drive 100 that is provided by port 134 and instructions 118. In addition program 138 sends a command to the interface of tape drive 100 in order to direct tape drive 100 to write the validity data to non-volatile memory of tape cartridge 104. In the preferred embodiment considered here cartridge memory 112 serves as the non-volatile memory for storing the validity data. Alternatively the tape media of tape cartridge 104 can be used for storage of the validity data. In the latter case the tape media of tape cartridge 104 has a pre-defined location that is reserved for storage of the validity data.

When tape drive 100 receives the backup command from program 138 together with the backup data, instructions 118 are executed by processor 114 in order to write the backup data to tape cartridge 104. When tape drive 100 receives the command for writing the validity data from program 138, instructions 118 are executed by processor 114 in order to write the validity data to cartridge memory 112 by means of RF interface 110. Alternatively instructions 118 are executed for writing of the validity data to the pre-defined location of the tape media of tape cartridge 104.

For reading of the backup data from tape cartridge 104, such as for the purpose of accessing archived data, in particular business operational data, or in order to perform a data retrieval or disaster recovery operation, the following procedure is performed: Tape drive 100 receives a backup data read command from program 138. In response instructions 118 are executed in order to read the validity data from cartridge memory 112 via RF interface 110 or alternatively from the predefined location of the tape media. In addition the current time is read from time reference 144.

Instructions 120 are executed for evaluation of the validity data and the current time obtained from time reference 144. If the current time is within the validity time interval given by the validity data, instructions 120 enable execution of the backup data read command received from program 138. Otherwise execution of the backup data read command is refused and no access to the backup data stored on tape cartridge 104 is possible. In other words, the backup data that is stored on tape cartridge 104 is only read from the tape cartridge 104 by tape drive 100 and provided back to program 138 via storage area network 126 if the current time is within the validity time interval.

In addition, instructions 120 can be executed in order to check the status of tape drive 100. For this purpose the manufacturing time 'Time' and the lifetime 'Lifetime' is read from memory 146 for evaluation by means of instructions 120. The lifetime value is added to the manufacturing date. If the current time provided by time reference 144 is before the manufacturing date plus the lifetime this means that tape drive 100 is in an enabled state. Otherwise tape drive 100 is disabled for reading and writing as it has reached its lifetime limitation. In this case tape drive 100 needs to be returned to the manufacturer for refurbishing. The manufacturer will reset the manufacturing date 'Time' stored in memory 146 to the current date As a consequence tape drive 100 will become usable for another 'Lifetime' before it needs servicing again.

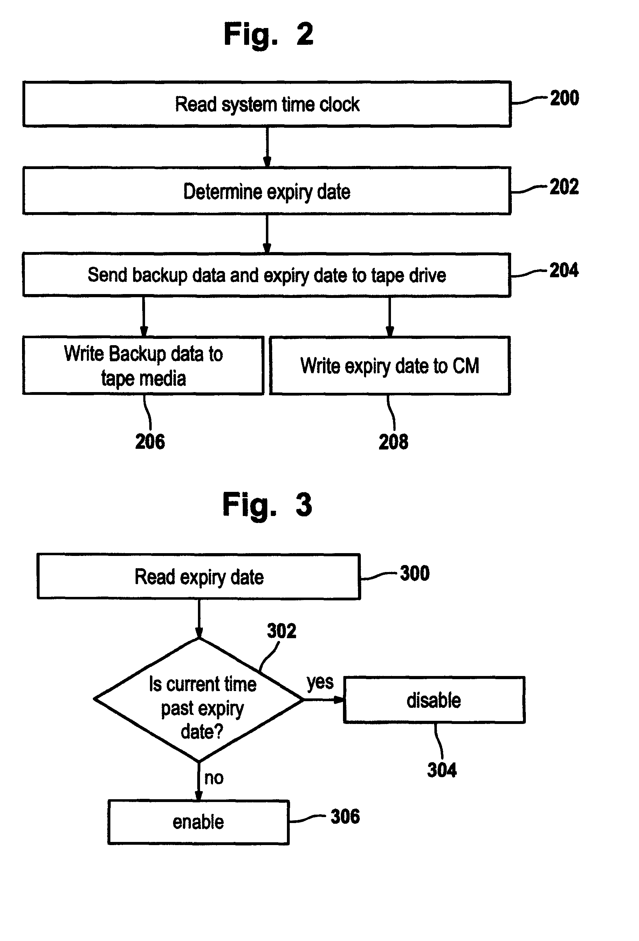

Figure 2 is a flowchart of a backup operation performed by the computer system shown in figure 1. In step 200 the client computer for which the backup is to be performed reads its client computer system time clock. On this basis at least an expiry date is determined by adding a predefined value to the current system time (step 202). The backup data and the expiry date are sent to the tape drive via a network (step 204). In the preferred embodiment of figure 1 this is done through the intermediary of media server 128. The tape drive that receives the backup data writes the backup data to its loaded tape cartridge (step 206). In addition the tape drive writes the expiry date to the cartridge memory (step 208).

Figure 3 is a flow chart of the steps involved in reading previously stored backup data from tape cartridge. In step 300 the tape drive reads the expiry date from the cartridge memory. In addition the current time is read from the time reference of the tape drive.

In step 302 the current time is compared with the expiry date. If the current time is past the expiry date any tape read operation is disabled in step 304. As a consequence no access to the backup data stored on the tape media is possible as the backup data has passed its validity time interval. In addition a complete overwrite of all data stored on the tape media can be performed in order to automatically erase the data. This has the advantage of being a secure deletion of all the data but has the disadvantage of taking a relatively long time. As an alternative to performing a complete overwrite operation and end of data (EOD) mark is written at the beginning of the tape media. Thus, the tape media is marked as being empty even though most of the data is still stored on the tape. This procedure has the advantage of being relatively quick but is not as secure as the complete overwrite operation as most of the data is still on the tape media.

If the current time is before the expiry date the control goes from step 302 to step 306 such that the requested backup data read operation is executed and the backup data is provided from the tape drive to the requesting client computer.

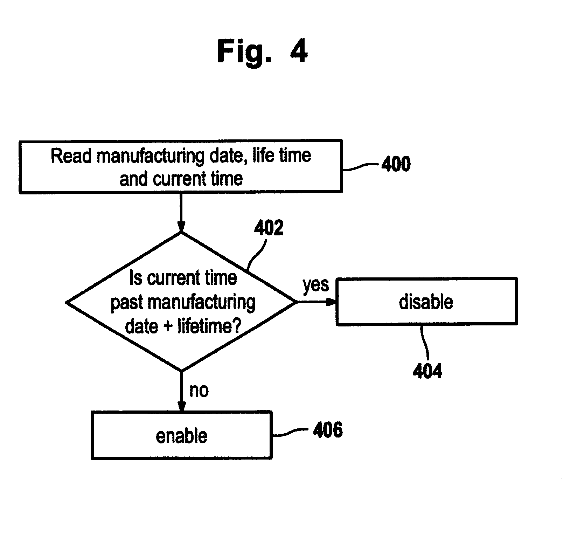

In addition to the procedures of Figures 2 and 3 the procedure of Figure 4 can be performed each time an attempt is made to use tape drive 100. In step 400 the manufacturing date and the lifetime stored in a non-volatile memory of the tape drive are read. In addition the current time is obtained from a time reference of the tape drive. In step 402 it is determined whether the current time is past the manufacturing date plus the lifetime. If this is the case the tape drive is disabled in step 404 and needs to be returned to the manufacturer for refurbishing and resetting of the manufacturing date. If the contrary is true operation of the tape drive is enabled in step 406.

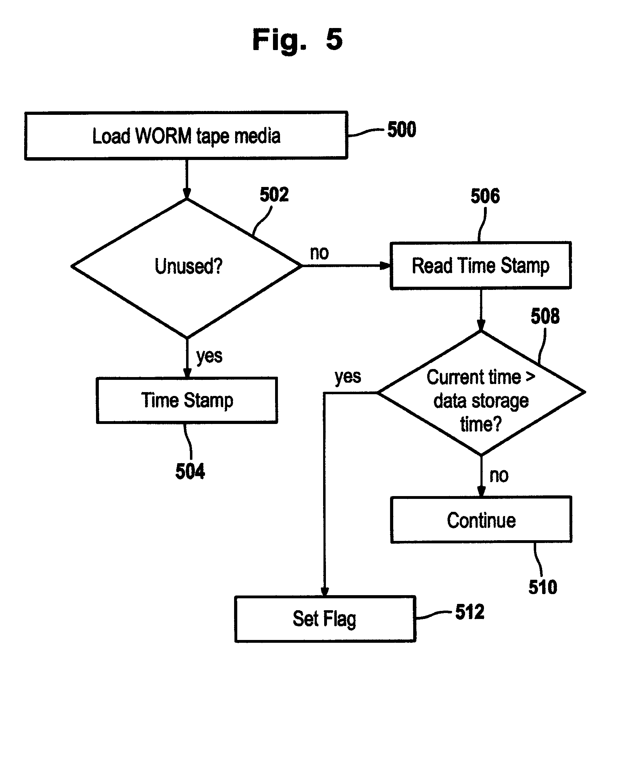

Figure 5 is a flow chart of the operation of tape drive 100 (cf. Figure 1) with respect to a WORM tape cartridge. In step 500 the WORM tape cartridge is loaded in the tape drive. In step 502 the firmware of the tape drive determines whether the tape cartridge is unused or if data has already been written onto the tape. Preferably this determination is made by reading a flag from a predefined storage location of the cartridge memory of the tape drive. If the flag is not set this indicates that the tape cartridge is unused.

If the tape cartridge is unused the control goes to step 504. In the preferred embodiment considered here the time reference of the tape drive apparatus is used for time stamping of the tape cartridge, e.g. by storing the time stamp indicating the current time provided by the time reference in a predefined storage location of the cartridge memory. Alternatively or in addition a data storage time is stored in the cartridge memory that indicates an absolute or relative time until which the tape cartridge can be used in its normal WORM mode. Further, control information regarding the status of the tape cartridge after expiration of the data storage time can be stored in the cartridge memory. For example there are three different user selectable options regarding the control information:
(i) after expiration of the data storage time the tape status is kept in the normal WORM format. A control indicator is stored that indicates that the tape cartridge is to be moved from the tape drive, e.g. a library, to an off line storage as in a hierarchical storage environment.
(ii) an indicator is stored in the cartridge memory that indicates that the tape cartridge can be re-written or erased after expiration of the data storage time. If an over-write or erase operation is performed when the indicator is set, the tape status stored in the cartridge memory is re-set to 'unused'.
(iii) the tape is to be erased and reset to its unused status.

The later option (iii) has the advantage that out-of-time data become unattainable with no outside intervention which relives the customer of that liability. Another advantage is that reuse of a WORM tape is facilitated. Further, the time stamp, e.g. the date the data was written onto the tape media, stored in the cartridge memory can be read by the tape drive and passed back to a library, archive, or backup application. This facilitates to limit search ranges for retrieval of archive data. Another application is for performing standard backups by setting the time length that backup data is kept. This has the advantage that the backup data cannot be overwritten accidentally.

If step 502 determines that the tape cartridge is not unused, the time stamp that is stored in the cartridge memory of the tape cartridge is read in step 506. In step 508 it is determined whether the current time is past the data storage time. For example, the data storage time is offset by a predetermined time interval from the time stamp read in step 506. When the current time exceeds the time stamp plus the length of the predefined time window the data storage time, i.e. the lifetime of the data, is exceeded.

Alternatively the data storage time is stored in the cartridge memory. For example the data storage time is an absolute point of time, such as a date, that indicates when the normal WORM status of the tape cartridge ends.

When the current time exceeds the data storage time the control goes to step 512 where a corresponding flag is set that indicates that the data storage time has been exceeded. For example, there is a separate flag for each one of the above described options (i) to (iii). When the current time does not exceed the data storage time the control goes to step 510 where normal operation in the WORM mode continues.

### List of Reference Numerals

- 100: tape drive
- 102: tape mechanism
- 104: tape cartridge
- 106: heads
- 108: eject button
- 110: RF interface
- 112: cartridge memory
- 114: processor
- 116: firmware
- 118: instructions
- 120: instructions
- 122: program
- 124: port
- 126: storage area network
- 128: media server computer
- 130: Ethernet network
- 132: processor
- 134: backup application program
- 136: local disk
- 138: program
- 140: firmware
- 142: port
- 144: time reference
- 146: memory
- 148: system clock

## Claims

1. A tape drive apparatus comprising:
- an interface (124) for receiving validity data from a backup application program (134), the validity data including an indication of a validity time interval of backup data,
- a data transfer apparatus (106) for transferring data between a loaded tape cartridge (104) and the tape drive apparatus (100), the data transfer apparatus being arranged to write the validity data to a non-volatile memory (112) of the tape cartridge.

2. The tape drive apparatus of claim 1, the validity data including an indication of an expiry date.

3. The tape drive apparatus of claim 1 or 2, the validity data including an indication of an activation date.

4. The tape drive apparatus of claim 1, 2 or 3, the validity data including an indication of an activation date and an expiry date.

5. The tape drive apparatus of any one of the preceding claims, the interface being arranged to receive a command from the backup application program, the command comprising the validity data.

6. The tape drive apparatus of any one of the preceding claims, the non-volatile memory including a tape of the tape cartridge.

7. The tape drive apparatus of any one of the preceding claims, the non-volatile memory including an integrated circuit memory associated with the tape cartridge.

8. The tape drive apparatus of any one of the preceding claims, the non-volatile memory including a cartridge memory.

9. A computer program product for controlling a tape drive (100), the computer program product comprising instructions for:
- receiving validity data including an indication of a validity time interval of backup data,
- writing the backup data to a tape cartridge (104),
- writing the validity data to a non-volatile memory (112) of the tape cartridge.

10. The computer program product of claim 9 comprising an instruction for execution of a command received from a backup application program (134), the command comprising the validity data.

11. A computer backup application program product comprising instructions for sending backup data to a tape drive apparatus (100), the backup data comprising validity data including an indication of a validity time interval of the backup data.

12. The computer backup application program product of claim 11, the instructions comprising a command for sending of the validity data to an interface of the tape drive apparatus.

13. A tape drive apparatus comprising:
- a time reference (144),
- a data transfer apparatus (106) for transferring data between a loaded tape cartridge (104) and the tape drive apparatus, the data transfer apparatus being adapted to read validity data including an indication of a validity time interval from a non-volatile memory (112) of the tape cartridge,
- a control apparatus (114, 116, 120) coupled to the time reference and to the data transfer apparatus, the control apparatus being arranged to disable usage of the tape cartridge if a current time given by the time reference is not within the validity time interval.

14. The tape drive apparatus of claim 13, the control apparatus being arranged to automatically initiate destruction of backup data stored on the tape cartridge if the current time is past the upper limit of the validity time interval.

15. The tape drive apparatus of claim 13 or 14, the control apparatus being arranged to automatically initiate destruction of the backup data by an overwrite operation.

16. The tape drive apparatus of claim 13, 14, or 15, the control apparatus being arranged to initiate destruction of the backup data by writing an end of data mark at the beginning of the tape of the tape cartridge.

17. The tape drive apparatus of any one of claims 13 to 16, wherein the time reference includes a real-time clock (RTC).

18. The tape drive apparatus of any one of claims 13 to 16, further comprising a non-volatile memory (146) for storing a manufacturing time, the control apparatus being arranged to temporarily disable the tape drive if a pre-defined lifetime after the manufacturing time is exceeded.

19. A computer program product for controlling a tape drive, the computer program product being arranged to control the tape drive to:
- receive a current time from a time reference (146),
- receive validity data including an indication of a validity time interval from a non-volatile memory (112) of a tape loaded in a data transfer apparatus of the tape drive,
- disable use of the tape cartridge if the current time is not within the validity time interval.

20. The computer program product of claim 19, being arranged to control the tape drive to automatically destroy backup data stored on the tape cartridge if the current time is past an upper limit of the validity time interval.

21. A method of storing backup data on a tape cartridge (104) comprising:
- receiving backup data from a backup application program (134),
- writing the backup data to a tape cartridge (104),
- receiving validity data including an indication of a validity time interval of the backup data, and
- writing the validity data to a non-volatile memory (112) of the tape cartridge (104).

22. A method of reading backup data from a tape cartridge (104), comprising:
- reading validity data including an indication of a validity time interval from a non-volatile memory (112) of the tape cartridge, and
- enabling a read operation for reading the backup data from the tape cartridge if the current time is within the validity time interval.
